# EUROPEAN PATENT APPLICATION

(11) **EP 3 745 282 A1**
(43) Date of publication of application: **02.12.2020**
(21) Application number: 19177164.1
(22) Date of filing: 29.05.2019
(51) Int. Cl.: G06F 16/9535

(54) **IMPROVED MESSAGING PLATFORM**

(71) Applicant: KBC Groep NV, 1080 Brussel (BE)
(72) Inventor: VAN ROMPAYE, Bart, 3293 Kaggevinne (BE); ABDULHAYOGLU, Mehmet Ali, 3000 Leuven (BE); ALEVIZOPOULOU, Georgia, 3000 Leuven (BE); MENOUNOU, Krina, 3000 Leuven (BE); HUYGHE, Geert, 1030 Schaarbeek (BE); TOP, Siegfried, 3001 Heverlee (BE); SEYS, Peter, 9180 Moerbeke-Waas (BE); DUDEJOVA, Kristina, 5837 Fentange (LU); VRELUST, Bart, 2970 ´s Gravenwezel (BE)
(74) Representative: Brantsandpatents bvba

(57) **Abstract**

The current invention relates to a computer-implemented method for generating a notification for a user based on a plurality of messages originating from a plurality of information sources, said method comprising the steps of: repeatedly receiving, by a server, a message belonging to said plurality of messages originating from said plurality of information sources; comparing, by said server, said message to context data in view of user preference data; determining, by said server, whether the user should receive a notification based on said comparing; if so, sending, by said server, the notification to a device of said user; wherein said comparing is further done in view of an objective function with respect to said context data; wherein said context data comprises at least two physical entity records; and wherein said user preference data comprises at least a regularization type preference and a regularization level preference.

## Description

### Technical field

The invention pertains to the technical field of computer network data access, and more particularly to systems, methods and data structures for accessing data and data-related services over a network.

### Background

There are many types of data that users need to manage and otherwise access. Users want to regularly receive information from various sources, such as feeds with pre-structured data and/or non-structured data with potential relevance to them. Hereby, it is a given that only a minor part of this information is of value to the user. Users may access this data on demand by requesting it from storage, or the data may be sent in real time to the user, e.g., as an e-mail, a push message notification, an in-app message, a dedicated web interface, a web dashboard, or a news item in a feed. The overload of potential information however makes it infeasible for the user to go through the information manually to look for information that is relevant.

What is needed is a method and system or platform that provides information to users from possibly many disparate information sources, in a manner that takes into account relevance for the user. The platform needs to allow for considerable control by each user, hence requiring to take account of user preferences.

EP 1 379 971 describes a method in a computer network comprising receiving a notification directed to a user from an information source, and determining whether the user should receive the notification based on user preference and context data. However, EP 1 379 971 lacks means to determine the relevance of the information coming from information sources for the user.

US 9,514,232 describes a news alert service that gathers news articles from a large number of sources and presents news articles that are relevant to the interests of its users at times (e.g., when they are notified, the frequency at which they are notified, etc.) that may be specified by the users. However, the service according to US 9,514,232 lacks means for effectively handling the relevance of a large number of information sources.

The invention thereto aims to address at least some of the problems mentioned.

### Summary of the invention

In a first aspect, the present invention provides a method according to claim 1.

The invention advantageously addresses the need of a user to extract relevant information from information coming from a plurality of information sources when monitoring context data, the related physical entity records and the corresponding physical entities. The invention is useful for any number of information sources, messages and for any complexity of the messages, but is particularly advantageous if the number of information sources and/or the number of messages and/or the complexity of at least one of the messages is high, making manual checks performed by the user infeasible.

Relevance is thereby expressed in terms of an objective function defined on said context data comprising at least two physical entity records. In one example (see Example 1), the context data may relate to a plurality of physical objects stored at different locations, whereby each of the objects corresponds to a physical entity record stored in a database and vice versa, and the objective function may for instance relate to maximizing the probability that all, or alternatively at least one, of the objects remains intact over a given time period of, e.g., 1 year.

The matter of relevance is tackled in a combined manner, taking into account relevance in terms of significance while taking account of uncertainty.

First, the relevance of a message in terms of significance is assessed in view of the difference between a first value of said objective function calculated without taking into account said message and a second value of said objective function taking into account said message. In this way, the objective function acts as metric for assessing the significance of a given message, or related, whether the message may be of importance.

However, additionally, every information source is associated with some degree of uncertainty, as some may be prone to update failures or may be of too little significance overall to be "used" as a basis for decisions triggered by said notification. Hence, the user may desire that notifications are based on sources which provide sufficient certainty and are known to be of significance, leading to higher transparency and user-friendliness for the user, at the possible cost of possibly missing relevant messages originating from sources deemed unimportant. On the other hand, messages may be identified as "anomalies" or "outliers" that are not in line with messages originating from other sources, leading to "false positives", i.e. notifications relating to messages that seemingly predict a large change with respect to the context data, yet in fact relate to "false alarms". Alternatively or additionally, the user hence needs a mechanism to suppress such "false positives" to some extent, due to their high uncertainty, leading to increased user-friendliness and increased effectivity of monitoring, at the possible cost of missing a relevant message which was initially deemed to be an outlier. To address these needs, the user preference data preferably comprises at least a regularization type preference and/or a regularization level preference.

Hereby, "regularization" refers to any mechanism that modifies the output of the objective function in view of the uncertainty and/or significance of the information source providing the messages that impact the output of the objective function. This addressed the problem that despite messages being generated constantly, with a high level of "noise", i.e. a high uncertainty, a large part of the messages hardly (if at all) contributes to the eventual values generated by the objective function. Regularization thus reflects a level of distrust with respect to the outputs generated by the objective function, based on mathematical notions of stability. Regularization can hence be understood as a three step approach:
- define some notion of normality for each information source, typically an absence of messages, or a "zero signal";
- model the stream of messages from every information source as a sum of content and noise, or "real signal + noise";
- remove the noise by pushing the output of the objective function, or "the total signal", closer to what is normal.

In one variant, the regularization boils down to automatically scaling the impact of incoming messages according to their uncertainty, while retaining all messages from all sources, and preferably updating a reference value of the objective function for each arrival. The triggering of a notification may then relate to messages from any information source, whereby regularization may suppress some of the anomalies or outliers. Hereby, the user may preferably control the intensity of said regularization via said regularization level preference. In a corresponding and/or related preferred embodiment, said regularization type preference relates to regularization without variable selection; said regularization without variable selection preferably relating to Tikhonov regularization or ridge-type regularization; wherein said regularization level preference relates to a value, preferably a real value, indicative of the intensity of said regularization.

In another variant, the regularization corresponds to automatically suppressing information sources, for some period in time, for which messages are either deemed too uncertain, or of too little significance, while scaling the other messages according to their uncertainty. The triggering of a notification may then relate to messages from only the information sources that were not suppressed, whereby regularization may further scale the impact of those messages that are not suppressed. Hereby, the user may preferably control the intensity of said regularization via said regularization level preference. In a corresponding and/or related preferred embodiment, said regularization type preference relates to regularization with variable selection; said regularization with variable selection preferably relating to lasso regularization; wherein said regularization level preference relates to a value, preferably a real value, indicative of the intensity of said regularization.

With regularization, the user is further provided with a useful tool to assess the value of various information sources. The invention can hence be of value in deciding which subscriptions to information sources (paying or not) should be kept and which may be removed.

In a second aspect, the present invention provides a computing system according to claim 12.

In a further aspect, the present invention provides a use according to claim 15.

Further preferred embodiments and their advantages are described in the detailed description and the conclusions.

### Detailed description of the invention

In this document, the terms "system" and "platform" are used interchangeably.

The term information source may relate to any data channel, data stream, data set, or data subscription service providing content in a file-based, update-based, synchronization-based and/or message-based format, whereby each information source not providing data in pure messages may be considered as equivalent to message based, whereby updated portions of data may relate to one or more new messages. The messages may be provided on demand by requesting it from storage, or may be sent in real time to the user, e.g., as an e-mail, a push message notification, an in-app message, a dedicated web interface, a web dashboard, or a news item in a feed. The messages may be delivered in the context of a subscription and/or an account with the provider of an information source.

In a first aspect, the invention provides a computer-implemented method for generating a notification for a user based on a plurality of messages originating from a plurality of information sources accessible over a computer network, said plurality of information sources preferably comprising at least three information sources, more preferably at least four information sources, most preferably at least five information sources; said method comprising the steps of:
- repeatedly receiving, by a server, a message belonging to said plurality of messages originating from said plurality of information sources;
- comparing, by said server, said message to context data in view of user preference data;
- determining, by said server, whether the user should receive a notification based on said comparing;
- if so, sending, by said server, the notification to a device of said user;
wherein, preferably, said comparing is further done in view of an objective function with respect to said context data;
wherein, preferably, said context data comprises at least two physical entity records;
wherein, preferably, said user preference data comprises at least a regularization type preference and/or a regularization level preference, preferably a regularization type preference and a regularization level preference; and
wherein, preferably, said step of comparing comprises determining a difference between a first value of said objective function calculated without taking into account said message and a second value of said objective function taking into account said message, wherein said determining whether said user should receive said notification is preferably based on said difference exceeding a predefined threshold; and preferably wherein said step of determining whether said user should receive said notification comprises determining whether said first value, preferably said reference value, should be updated based on at least said second value.

In a preferred embodiment of the invention, said plurality of information sources accessible over said computer network, preferably the internet, preferably comprises at least three information sources, more preferably at least four information sources, even more preferably at least five information sources, most preferably at least six information sources.

In a preferred embodiment, said plurality of information sources comprises at least one unstructured information source; wherein at least one message originating from said unstructured information source comprises a raw text string; wherein said step of comparing said message to said context data comprises natural language processing of said raw text string for assessing a relevance of said message with respect to said context data. In such an embodiment, preferably, said natural language processing involves processing natural language according to an ontology. This is advantageous because it may effectively automate part of the work that is normally carried out by the user monitoring the context data and the related physical entity data records, reducing the burden of the user and/or leading to improved monitoring.

In another preferred embodiment, said assessing of said relevance of said message with respect to said context data relates to identifying an indirect link between a result of said natural language processing of said raw text string and an entry comprised in said context data, preferably comprised in one of said at least two physical entity records; and wherein said identifying of said indirect link comprises searching a database comprising indirect link data for said indirect link based on said result of said natural language processing. This is advantageous because it allows exploiting known relations between the physical entity records and e.g. news items which may not directly relate to said physical entity records but are known e.g. by experts to be relevant for said physical entity records. By automating also this aspect of indirect linking, the burden on the user is reduced and/or improved monitoring is obtained.

In a preferred embodiment, said notification comprises an actionable item with respect to at least one physical entity record comprised in said context data, said actionable item preferably relating to an instruction for action selectable by said user, and wherein said method comprises the further steps of:
- receiving, from the device of the user, an instruction for action relating to said actionable item from said user;
- modifying, by said server and based on said instruction, at least one physical entity record belonging to said at least two physical entity records comprised in said context data.

In such an embodiment, an instruction for action is received from the user in a user-friendly manner. Particularly, by coupling the notification to an automated suggestion for action, the effort of the user may be reduced in many cases to deciding whether or not to perform the action suggested in the notification. This leads to increased user-friendliness and/or improved monitoring.

Preferably, the notification comprises information from at least one of said information sources, thereby indicating a causal link between the information from the at least one of said information sources and the actionable item.

Preferably, the actionable item is presented to said user via a visualization means. Preferably, the actionable item is presented in text form to said user via said visualization means. In an embodiment, the actionable item is presented as a text-based question via a chatbot, to which the user may answer via the chatbot and a user input device, such as a keyboard. In another embodiment, the actionable item may be selected via a user input device, such as a computer mouse. Preferably, the user input device allows to move a cursor displayed via said visualization means and a plurality of actionable items are presented via said visualization means, whereby for each actionable item a time is measured of proximal hovering of said cursor in spatial relation to the actionable item on the visualization means and/or whether the actionable item is selected. Preferably, said user preference data is updated based on said measured time per actionable item and/or whether an actionable item is selected. Thereto, each actionable item may be associated with a regularization type preference, and a regularization level preference associated with the regularization type preference may be updated based on said measured time corresponding to said actionable item and/or whether said actionable item is selected.

In another preferred embodiment, said user preference data comprises a belief relating to at least one information source belonging to said plurality of information sources, and in that said method comprises the further step of:
- receiving, from the user, a modification of said belief for increasing or reducing an emphasis with respect to said at least one information source.

Such an embodiment is advantageous in that it provides a further refinement of the regularization. While regularization provides automated tuning of information sources, and may in some embodiments even suppress certain information sources, it may be desirable to also let the user indicate information sources of choice. This provides the advantage that expert knowledge of the user may be adequately introduced in the method or system, leading to even better "filtering" of useful information.

In a preferred embodiment, said notification comprises an indication of the at least one information source from which the message on which the notification is based originates. This may be advantageous in that it provides the user with enhanced insight in what triggers the notification.

In another preferred embodiment, said context data relates to a physical object collection comprising a plurality of physical goods or physical objects located at one or more physical locations; wherein each of said at least two physical entity records relates to at least one of said physical goods or physical objects, preferably wherein each of each of said at least two physical entity records corresponds to one of said physical goods or physical objects and vice versa; wherein each of said at least two physical entity records comprises at least an identification of the at least one of said physical goods or physical objects to which it relates; and wherein said objective function relates to an integrity and/or safety and/or completeness of said physical object collection. An example of such an embodiment is provided in Example 1.

In a preferred embodiment, said context data relates to a portfolio comprising a plurality of tradable goods of which at least one relates to a physical entity; wherein each of said at least two physical entity records relates to at least one of said tradable goods, preferably wherein each of each of said at least two physical entity records corresponds to one of said tradeable goods being physical entities and vice versa; wherein each of said at least two physical entity records comprises at least an identification of the at least one of said tradable goods to which it relates; and wherein said objective function relates to a technical aim relating to said portfolio, said aim preferably relating to integrity and/or safety and/or completeness of said plurality of tradable goods. An example of such an embodiment is provided in Example 2.

In a preferred embodiment, the at least two physical entity records relate to at least one physical entity. Preferably, the physical entity relates to any tradable good, which may or may not be a perfectly tradable good. The physical entity may for instance relate to precious goods with intrinsic value such as gold, diamonds, (oldtimer) cars, wine, whiskey, art paintings, musical instruments, or jewelry, but may also relate to precious goods of which the value is related to the right that is conferred to the owner, such as bearer bonds or a storage medium comprising a numeric string representing an amount of a cryptocurrency, such as bitcoin. In yet another example the physical objects may relate to real estate, e.g. an object may correspond to a house, a building, an apartment, an apartment block, a garage, a garage block.

The invention is further described by the following non-limiting examples which further illustrate the invention, and are not intended to, nor should they be interpreted to, limit the scope of the invention.

### Exam pies

### Example 1: Physical object collection

In this example, the invention relates to the monitoring by a user of a physical object collection, said physical object collection comprising a plurality of physical goods or physical objects stored or located at a plurality of locations. The physical objects may for instance be precious goods with intrinsic value such as gold, diamonds, (oldtimer) cars, wine, whiskey, art paintings, musical instruments, or jewelry, but may also relate to precious goods of which the value is related to the right that is conferred to the owner, such as bearer bonds. In yet another example the physical objects may relate to real estate, e.g. an object may correspond to a house, a building, an apartment, an apartment block, a garage, a garage block. In a preferred example embodiment, each of the objects corresponds to a physical entity record stored in a database and vice versa. In one embodiment, the physical objects may relate to perishable goods which may suffer damage due to an incident relating to excessive temperatures or high moisture levels, as is e.g. the case for cars, wine, whiskey, art paintings, musical instruments, etc. Hereby, a first objective function may relate to maximizing the total number of objects across locations that remains intact over a given time period, e.g., one year. For such an objective function, in view of measurements and predictions for different locations available from different information sources, a notification may be generated whenever any of the locations is likely to suffer an incident based on a message originating from one of the information sources. However, a second objective function may relate to maximizing the chance that at least one object remains intact over the given time period of, e.g., 1 year. This may for instance relate to hard disk drives or flash drives comprising highly confidential information which is duplicated across multiple locations, whereby the hard disk drives or flash drives may or may not be connected to a computer network depending on the level of confidentiality required, and whereby the data on the drives may or may not be encrypted. Such highly confidential information may for instance relate to passwords, credentials or cryptocurrency assets. For such an objective function, predictions or measurements relating to a single location likely lack relevance and hence do not require a notification, unless a large majority of the objects is stored at that single location. Whether the latter is the case may be indicated by a strong alteration of the objective function's output in case an indicator of an incident at that single location is detected. In various related example embodiments, one information source may be an alert service offering alerts relating to the integrity and safety of locations and/or buildings, such as the detection of an alarm or incident at an object location. Another information source may relate to a raw text service providing news messages. Hereby, the detection of said the name of said location and/or the name of a building relating to the location may indicate that the message has relevance in view of the objective function.

An advantage of the invention lies in the control by the user of what is relevant and what is not, and to what extent notifications are required. Regularization enables selection of information sources which are meaningful to the end user. For instance, a news message from a single information source regarding a fire at a location may not be significant and may be deemed an outlier based on regularization, whereas multiple messages with highly similar content may indicate high relevance, and hence trigger a notification. Hereby, the strength of regularization allows to set a threshold depending on user preference. Moreover, the user may indicate whether he prefers regularization without variable selection or with variable selection. Overall, the user is relieved of the burden of manually going through all messages with potential relevance for the physical object collection. With regularization, the user is further provided with a useful tool to assess the value of various information sources. The invention can hence be of value in deciding which subscriptions to information sources (paying or not) should be kept and which may be removed.

### Example 2: Portfolio of tradable goods

In this example, the context data relates to a portfolio comprising a plurality of tradable goods of which at least two relate to a physical entity. The context data comprises a plurality of data records including at least two physical entity records, each of the physical entity records relating to a physical entity. The physical entity may be any physical investment product, for instance gold, diamonds, (oldtimer) cars, wine, whiskey, art paintings, collector's items, musical instruments, jewelry, bearer bonds, a house, a building, an apartment, an apartment block, a garage, a garage block. Beyond physical entity records, the portfolio may or may not comprise data records which do relate to entities that are not physical entities. Each of the data records is a structured set of entries for a number of attributes. One attribute may be the type of entity, e.g. stocks, equity, fixed income, cash, real estate, precious goods, investment fund, etc. Another attribute may indicate an amount of said entity. Yet another attribute may relate to a starting date or an ending date of a commitment related to said entity. In analogy with Example 1, another attribute may be a location of said entity, specified, e.g., in terms of a street address or a set of GPS coordinates. Another attribute may allow for a natural language description of the entity, which may be taken into account through natural language processing.

The objective function relates to a technical aim for said portfolio. The formulation of the objective function relates to a training of a plurality of parameters on the history of each of the information sources. The objective function may or may not further relate to an application of the Black-Litterman optimization. The information sources include pre-structured data comprising records comprising entries for a plurality of fields, as well as unstructured data comprising raw text. The pre-structured data provides indicators for news intensity, news sentiment and news readership, both at company level and at aggregate level. The pre-structured data may relate to an index. The user is further provided with possibilities of changing the information sources upon which a sentiment score is built, to cater to evolutions in social media use, evolutions in formal press. Hereby, sentiment is typically measured relative to some historical standard, but the relevant standard can be modified to emphasize belief in certain opinion makers. The process flow can be changed as well, with e.g. the date update being daily or more frequent.

The automated process hence feeds the human process, with added value for the portfolios being monitored. Particularly, the invention provides a comprehensive alternative to purely manual processing, provides a partial alternative to sub-decisions, and provides information generated in the process. Big shifts in forecasts can trigger a notification with explanation which is sent to users, e.g. portfolio managers, who can then rebalance their portfolios. The invention further allows to identify whether certain entities and/or the related financial instruments are being overvalued. Furthermore, the user may be warned of high volumes of negative news building up around a certain entity. Moreover, when e.g. the stock of some company has plummeted, an indirect link with several entities may be established based on linked companies and sectors that might be affected.

The way in which a notification may be generated for a user is further analogous to Example 1. Also in this example, the user is assisted in the burden of going through all messages with potential relevance for the portfolio. With regularization, the user is further provided with a useful tool to assess the value of various information sources. The invention can hence be of value in deciding which subscriptions to information sources (paying or not) should be kept and which may be removed.

## Claims

1. Computer-implemented method for generating a notification for a user based on a plurality of messages originating from a plurality of information sources accessible over a computer network, said method comprising the steps of:
- repeatedly receiving, by a server, a message belonging to said plurality of messages originating from said plurality of information sources;
- comparing, by said server, said message to context data in view of user preference data;
- determining, by said server, whether the user should receive a notification based on said comparing;
- if so, sending, by said server, the notification to a device of said user;
**characterized in that** said comparing is further done in view of an objective function with respect to said context data;
**in that** said context data comprises at least two physical entity records;
**in that** said user preference data comprises at least a regularization type preference and/or a regularization level preference, preferably a regularization type preference and a regularization level preference; and
**in that** said step of comparing comprises determining a difference between a first value of said objective function calculated without taking into account said message, preferably a reference value of said objective function, and a second value of said objective function taking into account said message, wherein said determining whether said user should receive said notification is based on said difference, preferably based on said difference exceeding a predefined threshold, and preferably wherein said step of determining whether said user should receive said notification comprises determining whether said first value, preferably said reference value, should be updated based on at least said second value.

2. Method according to claim 1, **characterized in that** said regularization type preference relates to regularization without variable selection; said regularization without variable selection preferably relating to Tikhonov regularization or ridge-type regularization; and **in that** said regularization level preference relates to a value, preferably a real value, indicative of the intensity of said regularization.

3. Method according to claims 1 or 2, **characterized in that** said regularization type preference relates to regularization with variable selection; said regularization with variable selection preferably relating to lasso regularization; and **in that** said regularization level preference relates to a value, preferably a real value, indicative of the intensity of said regularization.

4. Method according to claims 1-3, **characterized in that** said plurality of information sources comprises at least one unstructured information source; wherein at least one message originating from said unstructured information source comprises a raw text string; wherein said step of comparing said message to said context data comprises natural language processing of said raw text string for assessing a relevance of said message with respect to said context data.

5. Method according to claim 4, **characterized in that** said assessing of said relevance of said message with respect to said context data relates to identifying an indirect link between a result of said natural language processing of said raw text string and an entry comprised in said context data, preferably comprised in one of said at least two physical entity records; and wherein said identifying of said indirect link comprises searching a database comprising indirect link data for said indirect link based on said result of said natural language processing.

6. Method according to claims 1-5, **characterized in that** said notification comprises an actionable item with respect to at least one physical entity record comprised in said context data, said actionable item preferably relating to an instruction for action selectable by said user, and wherein said method comprises the further steps of:
- receiving, from the device of the user, an instruction for action relating to said actionable item from said user;
- modifying, by said server and based on said instruction, at least one physical entity record belonging to said at least two physical entity records comprised in said context data.

7. Method according to claims 1-6, **characterized in that** said user preference data comprises a belief relating to at least one information source belonging to said plurality of information sources, and **in that** said method comprises the further step of:
- receiving, from the user, a modification of said belief for increasing or reducing an emphasis with respect to said at least one information source.

8. Method according to claims 1-7, **characterized in that** said notification comprises an indication of the at least one information source from which the message on which the notification is based originates.

9. Method according to claims 1-8, **characterized in that** said notification comprises an indication of an impacted physical entity record; said impacted physical entity record relating to a physical entity record comprised in said at least two physical entity records whose presence in the context data contributes to said difference between said first value and said second value.

10. Method according to claims 1-9, **characterized in that** said context data relates to a physical object collection comprising a plurality of physical goods or physical objects located at one or more physical locations; wherein each of said at least two physical entity records relates to at least one of said physical goods or physical objects, preferably wherein each of each of said at least two physical entity records corresponds to one of said physical goods or physical objects and vice versa; wherein each of said at least two physical entity records comprises at least an identification of the at least one of said physical goods or physical objects to which it relates; and wherein said objective function relates to an integrity and/or safety and/or completeness of said physical object collection.

11. Method according to claims 1-10, **characterized in that** said context data relates to a portfolio comprising a plurality of tradable goods of which at least one relates to a physical entity; wherein each of said at least two physical entity records relates to at least one of said tradable goods, preferably wherein each of each of said at least two physical entity records corresponds to one of said tradeable goods being physical entities and vice versa; wherein each of said at least two physical entity records comprises at least an identification of the at least one of said tradable goods to which it relates; and wherein said objective function relates to a technical aim relating to said portfolio, said aim preferably relating to integrity and/or safety and/or completeness of said plurality of tradable goods.

12. A computing system for generating a notification for a user based on a plurality of messages originating from a plurality of information sources accessible over a computer network, said system comprising
- a server, the server comprising a processor, tangible non-volatile memory, program code present on said memory for instructing said processor, connection means for connecting to a device of said user and to one or more remote servers;
- said device of said user, the user device comprising a processor, tangible non-volatile memory, program code present on said memory for instructing said processor, a screen for displaying information to said user, preferably input means for receiving a user input means from a user, connection means for connecting to said server via said computer network;
- said one or more remote servers, each of said remote servers relating to at least one of said plurality of information sources, each of said one or more remote servers comprising connection means for connecting to said server via said computer network;
- at least one computer-readable medium, the at least one computer-readable medium accessible to said server and comprising a database, said database comprising context data and user preference data, the at least one computer-readable medium preferably comprised in said server;
said computing system configured for generating said notification for said user, said method comprising the steps of:
- retrieving, by said server, said context data and said user preference data from said computer-readable medium;
- repeatedly receiving, by said server, a message from each of said one or more remote servers, said message belonging to said plurality of messages originating from said plurality of information sources;
- comparing, by said server, said message to said context data in view of said user preference data;
- determining, by said server, whether the user should receive a notification based on said comparing;
- if so, sending, by said server, the notification to said device of said user;
**characterized in that** said comparing is further done in view of an objective function with respect to said context data;
**in that** said context data comprises at least two physical entity records;
**in that** said user preference data comprises at least a regularization type preference and/or a regularization level preference, preferably a regularization type preference and a regularization level preference; and
**in that** said step of comparing comprises determining a difference between a first value of said objective function calculated without taking into account said message and a second value of said objective function taking into account said message, wherein said determining whether said user should receive said notification is based on said difference, preferably based on said difference exceeding a predefined threshold; and preferably wherein said step of determining whether said user should receive said notification comprises determining whether said first value, preferably said reference value, should be updated based on at least said second value;
**in that,** preferably, said regularization type preference relates to either regularization without variable selection or to regularization with variable selection; said regularization without variable selection preferably relating to Tikhonov regularization or ridge-type regularization; said regularization with variable selection preferably relating to lasso regularization; wherein said regularization level preference relates to a value, preferably a real value, indicative of the intensity of said regularization; and
**in that,** preferably, said plurality of information sources comprises at least one unstructured information source; wherein at least one message originating from said unstructured information source comprises a raw text string; wherein said step of comparing said message to said context data comprises natural language processing of said raw text string for assessing a relevance of said message with respect to said context data.

13. System according to claim 12, **characterized in that** said database comprises indirect link data; **in that** said assessing of said relevance of said message with respect to said context data relates to identifying an indirect link between a result of said natural language processing of said raw text string and an entry comprised in said context data, preferably comprised in one of said at least two physical entity records; and wherein said identifying of said indirect link comprises searching said indirect link data for said indirect link based on said result of said natural language processing;
**in that,** preferably, said notification comprises an actionable item with respect to at least one physical entity record comprised in said context data, said actionable item preferably relating to an instruction for action selectable by said user, and wherein said method comprises the further steps of:
- receiving, from the device of the user, an instruction for action relating to said actionable item from said user;
- modifying, by said server and based on said instruction, at least one physical entity record belonging to said at least two physical entity records comprised in said context data;
**in that,** preferably, said user preference data comprises a belief relating to at least one information source belonging to said plurality of information sources, and **in that** said method comprises the further step of:
- receiving, from the user, a modification of said belief for increasing or reducing an emphasis with respect to said at least one information source;
**in that,** preferably, said notification comprises an indication of the at least one information source from which the message on which the notification is based originates;
**in that,** preferably, said notification comprises an indication of an impacted physical entity record; said impacted physical entity record relating to a physical entity record comprised in said at least two physical entity records whose presence in the context data contributes to said difference between said first value and said second value.

14. System according to claims 12-13, **characterized in that**
said context data relates to a physical object collection comprising a plurality of physical goods or physical objects located at one or more physical locations; wherein each of said at least two physical entity records relates to at least one of said physical goods or physical objects, preferably wherein each of each of said at least two physical entity records corresponds to one of said physical goods or physical objects and vice versa; wherein each of said at least two physical entity records comprises at least an identification of the at least one of said physical goods or physical objects to which it relates; and wherein said objective function relates to an integrity and/or safety and/or completeness of said physical object collection;
**and/ or in that** said context data relates to a portfolio comprising a plurality of tradable goods of which at least one relates to a physical entity; wherein each of said at least two physical entity records relates to at least one of said tradable goods, preferably wherein each of each of said at least two physical entity records corresponds to one of said tradeable goods being physical entities and vice versa; wherein each of said at least two physical entity records comprises at least an identification of the at least one of said tradable goods to which it relates; and wherein said objective function relates to a technical aim relating to said portfolio, said aim preferably relating to integrity and/or safety and/or completeness of said plurality of tradable goods.

15. Use of the method according to claims 1-10 in the system according to claims 11-14.
